# EUROPEAN PATENT APPLICATION

(11) **EP 3 722 034 A1**
(43) Date of publication of application: **14.10.2020**
(21) Application number: 19168844.9
(22) Date of filing: 12.04.2019
(51) Int. Cl.: B23C 5/20, B23C 5/06

(54) **TANGENTIAL MILLING CUTTING INSERT AND MILLING TOOL**

(71) Applicant: Ceratizit Luxembourg Sàrl, 8232 Mamer (LU)
(72) Inventor: KISTER, Fabien, 8232 Mamer (LU)
(74) Representative: Ciesla, Dirk

(57) **Abstract**

A tangential milling cutting insert (100) having a top side (1), a bottom side (2) and a plurality of side surfaces formed between the top side (1) and the bottom side (2) is provided. The side surfaces comprises first and second major side surfaces (3, 3a) and first and second minor side surfaces (4, 4a). A first major cutting edge (5) is formed at an intersection of the first major side surface (3) and the top side (1), which transitions via a first cutting corner (6) into a first minor cutting edge (7) formed at the intersection between the top side (1) and the first minor side surface (4). A through-hole (8) for receiving a fastener extends from the first major side surface (3) to the second major side surface (3a) along a first axis (A1). The cutting insert has two-fold rotational symmetry about a second axis (A2) extending perpendicular to the first axis (A1). A third axis (A3) extends perpendicular to the first axis (A1) and perpendicular to the second axis (A2). The first axis (A1) and the third axis (A3) span a first reference plane (RP1). The first axis (A1) and the second axis (A2) span a second reference plane (RP2). The first minor side surface (4) comprises a first minor clearance surface (41) adjoining the first minor cutting edge (7) and a first minor abutment surface (42). The first minor abutment surface (42) comes closer to the second reference plane (RP2) with increasing distance from the first minor clearance surface (41). The bottom surface (2) has an inclined first main abutment surface (21) extending away from the first reference plane (RP1) with increasing distance from the first major side surface (3).

## Description

The present invention relates to a tangential milling cutting insert and to a milling tool having at least one tangential milling cutting insert fastened to a seat.

In the technical field of machining of workpieces by milling, often milling tools are used which have a base body comprising a plurality of insert seats to which exchangeable milling cutting inserts are mounted. Typically, the base body is made from a rather tough material, such as tool steel, and the exchangeable milling cutting inserts are made from a harder and more wear-resistant material, such as e.g. cemented carbide (also referred to as hardmetal). There is demand for milling tools which enable high-speed machining of workpieces. In such an application the milling tool rotates with a very high rotational frequency, often as high as several ten thousand revolutions per minute. Such high rotational frequencies come along with high centrifugal forces acting on the milling cutting inserts. Consequently, as compared to conventional milling tools, mounting of the milling cutting inserts to the base body of the milling tool has to be effected in a manner which can withstand much higher acting centrifugal forces.

EP 1 083 017 A1 describes a milling tool and a radial milling cutting insert for high-speed machining. Mounting of the milling cutting insert to the base body of the milling tool is effected by a fastening screw which is passed through a through-hole extending from the top side (being the rake face) to the bottom side of the milling cutting insert and an external thread of which threadingly engages an internal thread provided in a base surface of the insert seat. Abutment surfaces of the milling cutting insert interact with corresponding support surfaces of the insert seat in a partly form-locking manner.

It is an object of the present invention to provide a milling cutting insert and a milling tool with such a milling cutting insert which enable an improved mounting of the milling cutting insert such that it can more reliably withstand high centrifugal forces.

This object is solved by a tangential milling cutting insert according to claim 1. Further developments are specified in the dependent claims.

The tangential milling cutting insert has: a top side, a bottom side, a plurality of side surfaces formed between the top side and the bottom side, the side surfaces comprising first and second major side surfaces and first and second minor side surfaces, a first major cutting edge formed at an intersection of the first major side surface and the top side, which transitions via a first cutting corner into a first minor cutting edge formed at the intersection between the top side and the first minor side surface, a second major cutting edge formed at an intersection of the second major side surface and the top side, which transitions via a second cutting corner into a second minor cutting edge formed at the intersection between the top side and the second minor surface, a through-hole for receiving a fastener extending through the milling cutting insert from the first major side surface to the second major side surface along a first axis, the cutting insert having two-fold rotational symmetry about a second axis extending perpendicular to the first axis and extending through the top side and through the bottom side, a third axis extending perpendicular to the first axis and perpendicular to the second axis, the first axis and the third axis spanning a first reference plane, the first axis and the second axis spanning a second reference plane, and the second axis and the third axis spanning a third reference plane. The first minor side surface comprises a first minor clearance surface adjoining the first minor cutting edge and - on a side of the first minor clearance surface facing away from the first cutting corner - a first minor abutment surface, the first minor abutment surface coming closer to the second reference plane with increasing distance from the first minor clearance surface. Adjacent to the first major side surface the bottom surface has an inclined first main abutment surface extending away from the first reference plane with increasing distance from the first major side surface.

Since the first minor abutment surface is inclined towards the second reference plane with increasing distance from the first minor clearance surface in combination with the two-fold rotational symmetry about the second axis, the tangential milling cutting insert can be securely clamped in a partly form-fitting manner by simultaneously abutting a second minor abutment surface and the second major side surface against corresponding support surfaces of the insert seat in the base body of a milling tool. Since the first main abutment surface is inclined away from the first reference plane, the tangential milling cutting insert can be securely clamped in a partly form-fitting manner by simultaneously abutting the first main abutment surface and the second major side surface against corresponding support surfaces of the insert seat in the base body of a milling tool. Thus, in particular the combination of the first main abutment surface, the first minor abutment surface and the second major side surface with their relative orientations enables secure mounting in a partly form-fitting manner. Further, since the through-hole extends along the first axis from the first major side surface to the second major side surface, the milling cutting insert can be tangentially mounted to the base body of a milling tool such that the first axis extends at least predominantly in the radial direction with respect to the rotational axis of the milling tool. Due to this, the large centrifugal forces acting on the milling cutting insert during high-speed machining mainly act in a direction along the first axis, which is the longitudinal direction of the fastener used for fastening the milling cutting insert in the insert seat. In particular in the case of the fastener being a fastening screw, this is very advantageous since fastening screws can withstand considerably higher loads in their longitudinal direction as compared to loads acting orthogonal to the longitudinal direction. Thus, the combination of the first main abutment surface, the first minor abutment surface and the second major side surface, their relative orientations and the through-hole extending along the first axis enables very secure mounting of the milling cutting insert without the risk of fastener failure as a result of large shear forces.

According to a further development, adjacent to the first major side surface the bottom surface has an inclined first additional main abutment surface extending away from the first reference plane with increasing distance from the first major side surface, the first additional main abutment surface being formed closer to the second minor side surface than the first main abutment surface. In this case an advantageous two-point contact of the bottom side of the milling cutting insert with corresponding support surfaces in the insert seat can be realized which enables extremely stable support. In particular, the first additional main abutment surface can be formed non-continuously with the first main abutment surface. For example, the first additional main abutment surface can be formed in the same plane with the first main abutment surface but separated therefrom. This facilitates the production process.

According to a further development the bottom side has a first auxiliary stop surface distanced further from the first reference plane and arranged closer to the second major side surface than the first main abutment surface, the first auxiliary stop surface extending away from the first reference plane with increasing distance from the first main abutment surface. The first auxiliary stop surface provides additional failure prevention in a case where a fastener for fixing the milling cutting insert comes close to overload. Preferably, the first auxiliary stop surface can be adapted to the insert seat of a milling tool such that it is non-contacting in normal operation and only contacts a corresponding surface of the seat when a fastener for fixing the milling cutting insert in the insert seat is elongated by acting centrifugal forces close to material failure. The first auxiliary stop surface can preferably extend away from the first reference plane at a steeper angle than the first main abutment surface, i.e. it is preferably inclined stronger than the first main abutment surface. Preferably, adjacent to the second major side surface the bottom surface has an inclined second main abutment surface extending away from the first reference plane with increasing distance from the second major side surface.

According to a further development the first minor abutment surface comes closer to the second reference plane with increasing distance from the top side. In this case the tangential milling cutting insert can be orientated in the insert seat in a particularly advantageous orientation with little axial tilting relative to the rotational axis of the milling tool. Progressive and particular smooth cutting during a ramping or plunging application is achieved in this way.

According to a further development a distance of the first major cutting edge from the first reference plane increases with increasing distance from the first cutting corner. In this case the resulting cutting forces are particularly advantageous. Negative axial force acting on the milling cutting insert and consequently also on the base body during machining are reduced in this way. Consequently, the whole system achieves a high stability which is a key factor in high speed milling.

According to a further development the first major side surface has a first major clearance surface adjoining the first major cutting edge, the first major clearance surface enclosing an obtuse external angle with the first reference plane. In this case the first main cutting edge can be supported particularly well against acting cutting forces during high-speed machining and simultaneously an advantageous main clearance angle can be realized. Preferably, a second major clearance surface is formed adjoining the second major cutting edge in the second major side surface, the second major clearance surface enclosing an obtuse external angle with the first reference plane.

According to a further development the first minor clearance surface comes closer to the second reference plane with increasing distance from the first minor cutting edge. In this case the edge radius of the first cutting corner can be conveniently adapted by grinding without requiring different milling insert blanks. Further, this enables smooth cutting and thus a high level of finishing on the workpiece. Preferably, also the second minor clearance surface comes closer to the second reference plane with increasing distance from the second minor cutting edge.

According to a further development the bottom side comprises a central protrusion having a convex shape in a side view along the third axis. In this case the tangential milling cutting insert can be realized particularly strong by providing sufficient material below the through-hole. Further, side surfaces of the central protrusion facing towards the first and second minor side surfaces can be used as additional securing elements to prevent the tangential milling cutting insert from detaching from the insert seat during high-speed machining. According to a further development the central protrusion has a convex shape also in a side view along the first axis. In this case, the different facets of the bottom side can particularly conveniently be ground in the production process.

The object is also solved by a milling tool according to claim 10. Further developments are specified in the dependent claims.

The milling tool has: a base body in which at least one seat for fastening a tangential milling cutting insert is formed and at least one milling cutting insert as described above fastened to the seat. The tangential milling cutting insert is fastened to the seat with a fastener such that the second major side surface rests against a radial support surface of the seat, the first main abutment surface rests against a radial securing surface of the seat, and a second minor abutment surface of the second minor side surface rests against an axial support surface. Preferably, a plurality of seats can be provided in the base body and a plurality of the tangential milling cutting inserts can be fastened to respective seats. The tangential milling cutting insert is securely held in the seat in at least partly form-fitting manner due to the second major side surface, the first main abutment surface and the second minor abutment surface resting against corresponding surfaces of the seat. As the tangential milling cutting insert is adapted for tangential mounting, the acting centrifugal forces during high-speed machining are directed mainly in the longitudinal direction of the fastener, thus preventing material failure of the fastener.

According to a further development - in a view along the third axis of the tangential milling cutting insert, the radial support surface of the seat and the radial securing surface of the seat enclose an acute angle. In this case, the tangential milling cutting insert is held in a particularly stable manner in the seat.

According to a further development - in a view along the second axis of the tangential milling cutting insert, the radial support surface of the seat and the axial support surface of the seat enclose an acute angle. In this case, the tangential milling cutting insert is held in a particularly stable manner in the seat.

According to a further development the seat has an auxiliary securing surface distanced from and extending at least regionally parallel to a first auxiliary stop surface of the tangential milling cutting insert. In this case, an additional means for preventing the tangential milling cutting insert from detaching from the seat is provided which secures the tangential milling cutting insert in a case where the fastener comes close to material failure.

Further advantages and developments will become apparent from the following description of an embodiment with reference to the enclosed drawings.

In the Figures:
- Fig. 1:: is a schematic side view along a first axis of a tangential milling cutting insert according to an embodiment;
- Fig. 2:: is a schematic perspective view on the bottom side of the tangential milling cutting inset;
- Fig. 3:: is a schematic side view along a third axis of the tangential milling cutting insert;
- Fig. 4:: is a schematic top view along a second axis of the tangential milling cutting insert;
- Fig. 5:: is a schematic side view of a milling tool having a plurality of the tangential milling cutting inserts mounted to respective seats;
- Fig. 6:: is another schematic side view of the milling tool with mounted tangential milling cutting inserts;
- Fig. 7:: is an enlarged detail of the seat in the base body of the milling tool without tangential milling cutting insert mounted;
- Fig. 8:: is another enlarged detail of the seat without tangential milling cutting insert mounted; and
- Fig. 9:: is a schematic view of the milling tool along a rotational axis thereof with a plurality of tangential milling cutting inserts mounted to respective seats.

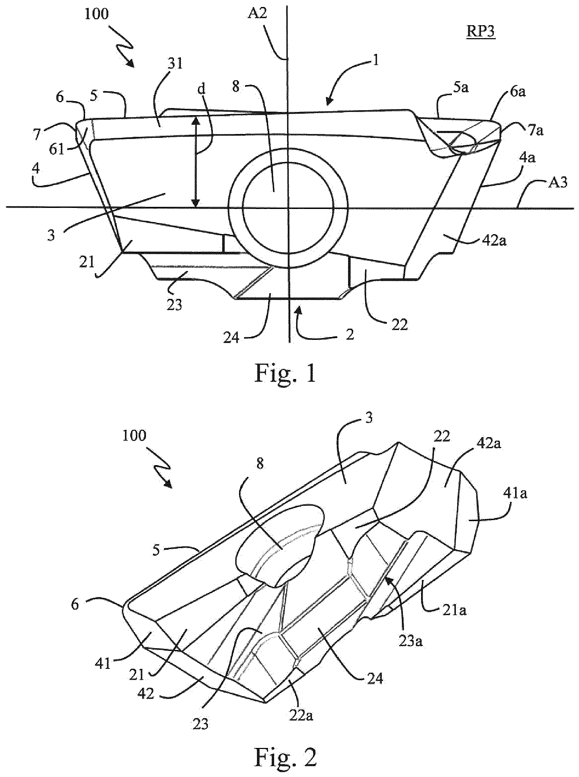

A tangential milling cutting insert 100 according to an embodiment will now be described with reference to Figs. 1 to 4. The tangential milling cutting insert 100 is particularly adapted for high-speed machining, as will become apparent from the following. The tangential milling cutting insert 100 is made from a hard and wear resistant material, preferably from cemented carbide (hardmetal) or cermet.

As can be seen in Figs. 1 to 4, the tangential milling cutting insert 100 has a top side 1, a bottom side 2, first and second major side surfaces 3, 3a extending between the top side 1 and the bottom side 2, and first and second minor side surfaces 4, 4a extending between the top side 1 and the bottom side 2. As can be seen in the drawings, each of these surfaces has a plurality of sub-surfaces which will be described more in detail further below. A through-hole 8 for receiving a fastener extends through the tangential milling cutting insert 100 from the first major side surface 3 to the second major side surface 3a along a first axis A1. A second axis A2 extends orthogonal to the first axis A1 and extends through the top side 1 and the bottom side 2. A third axis A3, which is orthogonal to the first axis A1 and is orthogonal to the second axis A2, extends through first minor side surface 4 and the second minor side surface 4a. The first axis A1 and the third axis A3 span a first reference plane RP1. The first axis A1 and the second axis A2 span a second reference plane RP2. The second axis A2 and the third axis A3 span a third reference plane RP3.

As can be seen in the Figures, the tangential milling cutting insert 100 has two-fold rotational symmetry about the second axis A2. Consequently, the first major side surface 3 and the second major side surface 3a are substantially identical, and the first minor side surface 4 and the second minor side surface 4a are substantially identical.

A first major cutting edge 5 extends at the intersection between the top side 1 and the first major side surface 3 and a substantially identical second major cutting edge 5a extends at the intersection between the top side 1 and the second major side surface 3a. The first major cutting edge 5 transitions via a curved first cutting corner 6 into a first minor cutting edge 7 formed at the intersection between the top side 1 and the first minor side surface 4. Similarly, the second major cutting edge 5a transitions via a curved second cutting corner 6a into a second minor cutting edge 7a formed at the intersection between the top side 1 and the second minor side surface 4a. The first minor cutting edge 7 extends only along a portion of the intersection between the top side 1 and the first minor side surface 4. Similarly, the second minor cutting edge 7a extends only along a portion of the intersection between the top side 1 and the second minor side surface 4a.

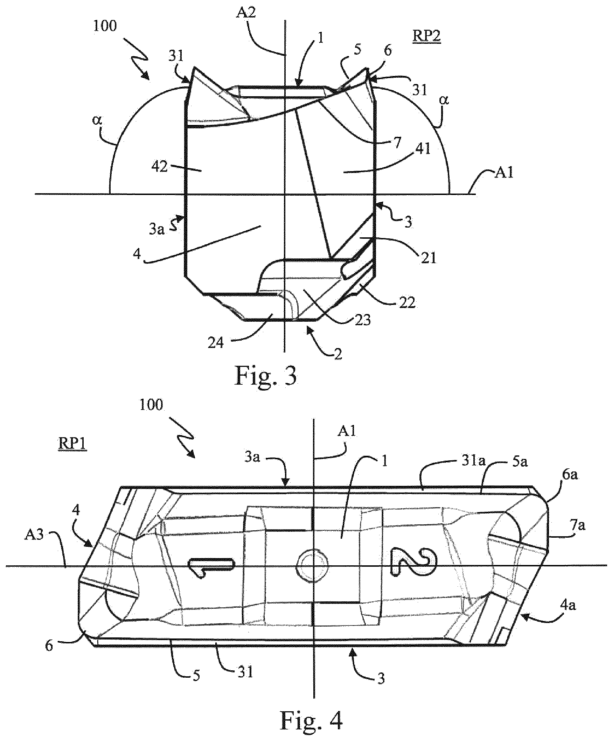

As can be seen in the view along the first axis A1 and perpendicular to the third reference plane RP3 of Fig. 1, a first major clearance surface 31 is formed adjoining the first major cutting edge 5 in the first major side surface 3. A similar second major clearance surface 31a is formed in the second major side surface 3a. The first and second major clearance surfaces 31, 31a are formed as substantially flat, inwardly inclined facets on the first and second major side surfaces 3, 3a, respectively. In other words, the first and second major clearance surfaces 31, 31a each enclose an obtuse external angle α with the first reference plane RP1, as can be seen in the view along the third axis A3 and perpendicular to the second reference plane RP2 of Fig. 3. Adjoining the first and second major clearance surfaces 31, 31a in the direction towards the bottom side 2, the first and second major side surfaces 3, 3a are formed as substantially flat abutment surfaces extending in parallel to the third reference plane RP3. As shown in Fig. 1, the first major cutting edge 5 extends such that it rises with increasing distance from the first cutting corner 6. Thus, a distance d of the first major cutting edge 5 from the first reference plane RP1 increases with increasing distance from the first cutting corner 6. Due to the symmetry, the second major cutting edge 5a rises analogously with increasing distance from the second cutting corner 6a.

Adjoining the first minor cutting edge 7, the first minor side surface 4 has a first minor clearance surface 41. Similarly, adjoining the second minor cutting edge 7a, the second minor side surface 4a has a second minor clearance surface 41a. The first minor clearance surface 41 transitions via a curved first corner clearance surface 61, which is formed adjoining the first cutting corner 6, into the first major clearance surface 31. Similarly, the second minor clearance surface 41a transitions via a curved second corner clearance surface, which is formed adjoining the second cutting corner 6a, into the second major clearance surface 31a. On a side of the first minor clearance surface 41 facing away from the first cutting corner 6 (and facing away from the curved first corner clearance surface 61), the first minor side surface 4 has a first minor abutment surface 42. Similarly, on a side of the second minor clearance surface 41a facing away from the second cutting corner 6a (and its associated second corner clearance surface), the second minor side surface 4a has a second minor abutment surface 42a. in the specific embodiment shown, the first and second minor abutment surfaces 42, 42a are flat surfaces extending from the intersection to the top side 1 up to the intersection to the bottom side 2. Although the first and second minor abutment surfaces 42, 42a directly adjoin the first and second minor clearance surfaces 41, 41a, respectively, in the embodiment shown, one or more further sub-surfaces may be provided therebetween instead.

As can be seen in Fig. 3, the first minor cutting edge 7 is inclined towards the first reference plane RP1 with increasing distance from the first cutting corner 6, i.e. it comes closer to the first reference plane RP1 with increasing distance from the first cutting corner 6. Similarly, the second minor cutting edge 7a is inclined towards the first reference plane RP1 with increasing distance from the second cutting corner 6a. The top side 1 serves as chip surface with regard to the first and second major cutting edges 5, 5a, the first and second cutting corners 6, 6a, and the first and second minor cutting edges 7, 7a. As can be seen in the view along the second axis A2 and perpendicular to the first reference plane RP1 of Fig. 4, the top side 1 is provided with corresponding chip conduction structures. In the region directly adjoining the first major cutting edge 5, the first corner cutting 6 and the first minor cutting edge 7, the top side 1 is inclined downward towards the first reference plane RP1 with increasing distance from the cutting edges. Similarly, in the region directly adjoining the second major cutting edge 5a, the second cutting corner 6a and the second minor cutting edge 7a, the top side 1 is inclined downward towards the first reference plane RP1 with increasing distance from the cutting edges.

The first minor clearance surface 41 and the first minor abutment surface 42 enclose an external angle > 180° with each other. Similarly, the second minor clearance surface 41a and the second minor abutment surface 42a enclose an external angle > 180° with each other. The first minor abutment surface 42 and the second minor abutment surface 42a are inclined towards the second reference plane RP2 with increasing distance from the first and second minor clearance surfaces 41, 41a, respectively. Further, the first and second minor abutment surfaces 42, 42a are each also inclined in such a manner that they come closer to the second reference plane RP2 with increasing distance from the top side 1, i.e. the circumferential extension of the tangential milling cutting insert 100 tapers towards the bottom side 2.

The first and second minor clearance surfaces 41, 41a come closer to the second reference plane RP2 with increasing distance from the top side 1, i.e. they are formed with a positive insert specific clearance angle each.

Next, the shape of the bottom side 2 will be described more in detail. As will be seen, the bottom side 2 has a plurality of sub-surfaces with specific functions. As can be seen in Fig. 1, a first main abutment surface 21 is formed adjacent to the intersection with the first major side surface 3 and adjacent to the intersection with the first minor clearance surface 41. Correspondingly, a second main abutment surface 21a is formed adjacent to the intersection with the second major side surface 3a and adjacent to the intersection with the second minor clearance surface 41a. The first and second main abutment surfaces 21, 21a are each inclined such that they extend away from the first reference plane RP1 with increasing distance from the first and second major side surfaces 3, 3a, respectively. Further, the bottom side 2 has an inclined first additional main abutment surface 22 adjacent to the first major side surface 3 and - analogously - an inclined second additional main abutment surface 22a adjacent to the second major side surface 3a. The first additional main abutment surface 22 is located on an opposite side of the second reference plane RP2 with respect to the first main abutment surface 21. Similarly, the second additional main abutment surface 22a is located on an opposite side of the second reference plane RP2 with respect to the second main abutment surface 21a. The first additional main abutment surface 22 is separated from the first main abutment surface 21 by a depression formed below the through-hole 8. Similarly the second additional main abutment surface 22a is separated from the second min abutment surface 21a by a depression formed below the through-hole 8. Preferably, the first main abutment surface 21 and the first additional main abutment surface 22 can be flat surfaces lying in a common plane. In this case, the second main abutment surface 21a and the second additional main abutment surface 22a are also formed as flat surfaces lying in a common plane.

As can be seen in Fig. 1 and Fig. 3, the bottom side 2 has a central protrusion 24 formed below the through-hole 8. As can be seen in Fig. 3, the central protrusion 24 has convex shape in a side view along the third axis A3. As can be seen in Fig. 1, the central protrusion 24 does also have a convex shape in a side view along the first axis A1.

Further, a first auxiliary stop surface 23 is provided in the bottom side 2 as an additional securing element during high-speed machining with the first main cutting edge 5. Correspondingly, a second auxiliary stop surface 23a is provided as an additional securing element during high-speed machining with the second main cutting edge 5a. The first auxiliary stop surface 23 is arranged on the same side of the second reference plane RP2 as the first main abutment surface 21 and the second auxiliary stop surface 23a is arranged on the same side of the second reference plane RP2 as the second main abutment surface 21a. The first and second auxiliary stop surfaces 23, 23a are distanced further from the first reference plane RP1 than the respective first and second main abutment surfaces 21, 21a. The first auxiliary stop surface 23 is arranged closer to the second major side surface 3a than the first main abutment surface 21 and extends away from the first reference plane RP1 with increasing distance from the first main abutment surface 21. The first auxiliary stop surface 23 is inclined steeper than the first main abutment surface 21. The second auxiliary stop surface 23a is arranged closer to the first major side surface 3 than the second main abutment surface 21a and extends away from the first reference plane RP1 with increasing distance from the second main abutment surface 21a. Next, the milling tool 200 and the arrangement of the tangential milling cutting insert 100 in a seat 202 in a base body 201 of the milling tool 200 will be described.

The milling tool 200 has base body 201 made from a tougher material than the tangential milling cutting insert 100 and can e.g. be made from tool steel. The base body 201 has a first end provided with an interface for connection to a spindle of a machining center or other milling machine and a second end provided with a plurality of seats 202 adapted for receiving the above described tangential milling cutting inserts 100. Although a base body 201 is shown in the drawings which has five seats 202 and five tangential milling cutting inserts 100 mounted to the seats 202, the base body 201 can also have less seats or more seats. The seats 202 are distributed about the circumference of the base body 201 such that the mounted tangential milling cutting inserts 100 protrude axially from the base body 201 with first minor cutting edges 7 and protrude radially from the base body 201 with first major cutting edges 5. The terms axially and radially are here used with reference to the rotational axis R of the milling tool 200. In particular, the seats 202 are arranged such that the mounted tangential milling cutting inserts 100 are all arranged with a similar orientation and only distributed at different angular positions in the circumferential direction.

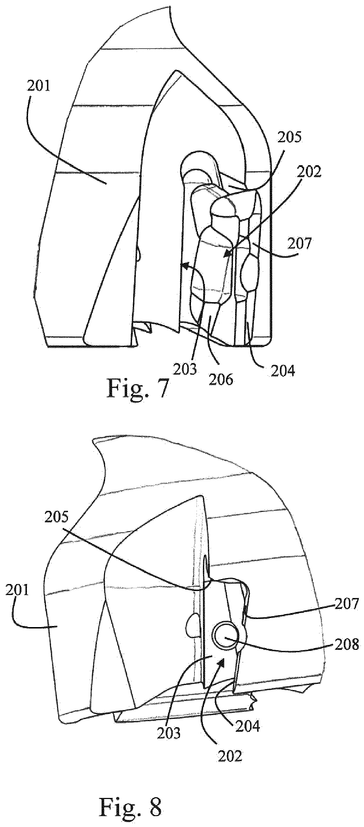

As can be seen in the enlarged detail of Fig. 8, the seat 202 has a radial support surface 203 against which the second major side surface 3a of the tangential milling cutting insert 100 rests in a mounted state. A threaded bore 208 having an internal thread is provided in the radial support surface 203 of the base body 201. The tangential milling cutting insert 100 is fastened to the seat by means of a fastener 300 having a shank which is passed through the through-hole 8 and having an external thread adapted to cooperate with the internal thread in the threaded bore 208. The axis of the threaded bore 208 is arranged such that its predominant direction is in the radial direction with respect to the rotational axis R. The fastener 300 has a head resting against a portion of the circumferential surface of the through-hole 8 in the tangential milling cutting insert 100. The tangential milling cutting insert 100 is mounted in a thus-called tangential orientation in the seat 202.

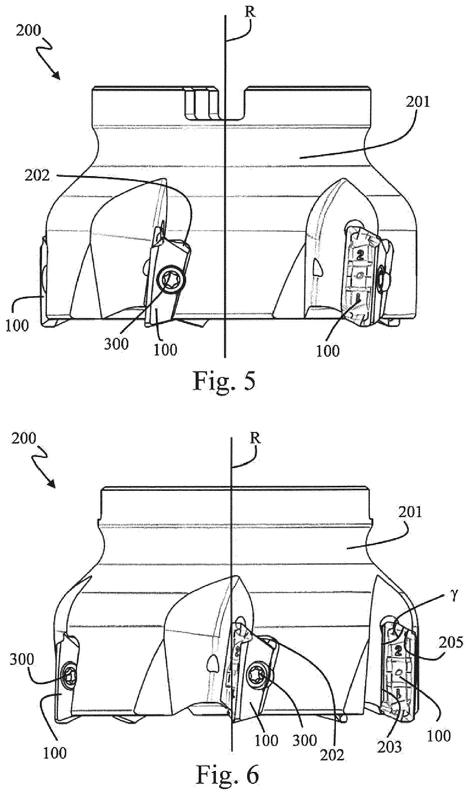

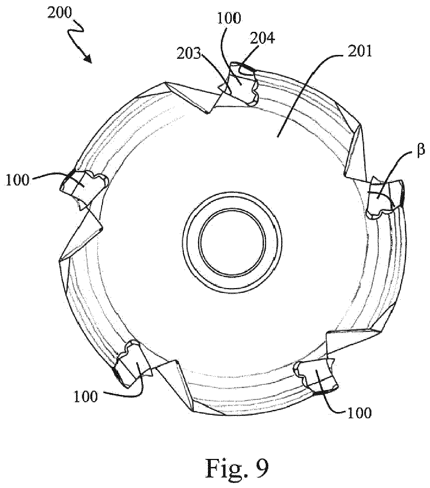

As can be seen in Fig. 7 and Fig. 8, the seat 202 has a radial securing surface 204 against which the first main abutment surface 21 of the tangential milling cutting insert 100 rests in a mounted state. Further, the seat 202 has an additional radial securing surface 207 against which the first additional main abutment surface 22 of the tangential milling cutting insert 100 rests in a mounted state. As can be seen in Fig. 7 and Fig. 8, the seat 202 has an axial support surface 205 against which the second minor abutment surface 42a of the second minor side surface 4a rests in a mounted state of the tangential milling cutting insert 100. In a view along the third axis A3 of the tangential milling cutting insert 100, the radial support surface 203 and the radial securing surface 204 enclose an obtuse angle β such that the tangential milling cutting insert 100 is to some extent positively held. The obtuse angle β can e.g. be seen in Fig. 9. In a view along the second axis A2 of the mounted tangential milling cutting insert 100, the radial support surface 203 and the axial support surface 205 enclose an acute angle γ such that the tangential milling cutting insert 100 is to some extent also positively held therebetween. This acute angle γ can be seen in Fig. 6.

An auxiliary securing surface 206 is further provided in the insert seat 202. The auxiliary securing surface 206 is arranged such that it extends at least regionally parallel to the first auxiliary stop surface 23 of the tangential milling cutting insert 100 in a mounted state but does not contact the first auxiliary stop surface 23 in a normal mounted state. In the case of an abnormal elongation of the fastener 300 during high-speed machining, i.e. a case where the tangential milling cutting insert 100 starts detaching from the seat 202, the first auxiliary stop surface 23 will move against the auxiliary securing surface 206, thus preventing failure of the fastener 300. Additionally, the side surfaces of the central protrusion 24 are tilted relative to the second reference plane RP2 and thus form even further securing elements by moving against further surfaces in the seat 202 in the case of abnormal elongation of the fastener 300 during high-speed machining.

Due to the features of the tangential milling cutting insert 100 described above, the tangential milling cutting insert 100 is realized as an indexable cutting insert having two subsequently useable cutting edge portions. When the cutting edge portion formed by the first major cutting edge 5, the first cutting corner 6 and the first minor cutting edge 7 has worn off, the tangential milling cutting insert 100 can be removed from the seat 202, rotated about the second axis A2 by 180 degrees and re-mounted to the insert seat 202. Then, the second major cutting edge 5a, the second cutting corner 6a and the second minor cutting edge 7a can be used for machining.

### Reference signs

- 1: top side
- 2: bottom side
- 3: first major side surface
- 3a: second major side surface
- 4: first minor side surface
- 4a: second minor side surface
- 5: first major cutting edge
- 5a: second major cutting edge
- 6: first cutting corner
- 6a: second cutting corner
- 7: first minor cutting edge
- 7a: second minor cutting edge
- 8: through-hole
- 21: first main abutment surface
- 21a: second main abutment surface
- 22: first additional main abutment surface
- 22a: second main abutment surface
- 23: first auxiliary stop surface
- 23a: second auxiliary stop surface
- 24: central protrusion
- 31: first major clearance surface
- 31a: second major clearance surface
- 41: first minor clearance surface
- 41a: second minor clearance surface
- 42: first minor abutment surface
- 42a: second minor abutment surface
- 61: first corner clearance surface
- 100: tangential milling cutting insert
- 200: milling tool
- 201: base body
- 202: seat
- 203: radial support surface
- 204: radial securing surface
- 205: axial support surface
- 206: auxiliary securing surface
- 207: additional radial securing surface
- 208: threaded bore
- 300: fastener
- A1: first axis
- A2: second axis
- A3: third axis
- RP1: first reference plane (A1-A3)
- RP2: second reference plane (A1-A2)
- RP3: third reference plane (A2-A3)
- R: rotational axis
- d: distance
- α: obtuse external angle
- β: acute angle
- γ: acute angle

## Claims

1. A tangential milling cutting insert (100) having
a top side (1),
a bottom side (2),
a plurality of side surfaces formed between the top side (1) and the bottom side (2), the side surfaces comprising first and second major side surfaces (3, 3a) and first and second minor side surfaces (4, 4a),
a first major cutting edge (5) formed at an intersection of the first major side surface (3) and the top side (1), which transitions via a first cutting corner (6) into a first minor cutting edge (7) formed at the intersection between the top side (1) and the first minor side surface (4),
a second major cutting edge (5a) formed at an intersection of the second major side surface (3a) and the top side (1), which transitions via a second cutting corner (6a) into a second minor cutting edge (7a) formed at the intersection between the top side (1) and the second minor surface (4a), a through-hole (8) for receiving a fastener extending through the milling cutting insert from the first major side surface (3) to the second major side surface (3a) along a first axis (A1),
the cutting insert having two-fold rotational symmetry about a second axis (A2) extending perpendicular to the first axis (A1) and extending through the top side (1) and through the bottom side (2),
a third axis (A3) extending perpendicular to the first axis (A1) and perpendicular to the second axis (A2), the first axis (A1) and the third axis (A3) spanning a first reference plane (RP1), the first axis (A1) and the second axis (A2) spanning a second reference plane (RP2), and the second axis (A2) and the third axis (A3) spanning a third reference plane (RP3),
wherein the first minor side surface (4) comprises a first minor clearance surface (41) adjoining the first minor cutting edge (7) and - on a side of the first minor clearance surface (41) facing away from the first cutting corner (6) - a first minor abutment surface (42), the first minor abutment surface (42) coming closer to the second reference plane (RP2) with increasing distance from the first minor clearance surface (41), and wherein - adjacent to the first major side surface (3) - the bottom surface (2) has an inclined first main abutment surface (21) extending away from the first reference plane (RP1) with increasing distance from the first major side surface (3).

2. The tangential milling cutting insert according to claim 1, wherein - adjacent to the first major side surface (3) - the bottom surface (2) has an inclined first additional main abutment surface (22) extending away from the first reference plane (RP1) with increasing distance from the first major side surface (3), the first additional main abutment (22) surface being formed closer to the second minor side surface (4a) than the first main abutment surface (21).

3. The tangential milling cutting insert according to any one of claims 1 and 2, wherein the bottom side (2) has a first auxiliary stop surface (23) distanced further from the first reference plane (RP1) and arranged closer to the second major side surface (3a) than the first main abutment surface (21), the first auxiliary stop surface (23) extending away from the first reference plane (RP1) with increasing distance from the first main abutment surface (21).

4. The tangential milling cutting insert according to any one of the preceding claims, wherein the first minor abutment surface (42) comes closer to the second reference plane (RP2) with increasing distance from the top side (1).

5. The tangential milling cutting insert according to any one of the preceding claims, wherein a distance (d) of the first major cutting edge (5) from the first reference plane (RP1) increases with increasing distance from the first cutting corner (6).

6. The tangential milling cutting insert according to any one of the preceding claims, wherein the first major side surface (3) has a first major clearance surface (31) adjoining the first major cutting edge (5), the first major clearance surface (31) enclosing an obtuse external angle (α) with the first reference plane (RP1).

7. The tangential milling cutting insert according to any one of the preceding claims, wherein the first minor clearance surface (41) comes closer to the second reference plane (RP2) with increasing distance from the first minor cutting edge (7).

8. The tangential milling cutting insert according to any one of the preceding claims, wherein the bottom side (2) comprises a central protrusion (24) having a convex shape in a side view along the third axis (A3).

9. The tangential milling cutting insert according to claim 8, wherein the central protrusion (24) has a convex shape also in a side view along the first axis (A1).

10. A milling tool (200) having a base body (201) in which at least one seat (202) for fastening a tangential milling cutting insert is formed, and at least one milling cutting insert (100) according to any one of claims 1 to 9 fastened to the seat (202),
wherein the tangential milling cutting insert (100) is fastened to the seat (202) with a fastener (300) such that:
the second major side surface (3a) rests against a radial support surface (203) of the seat (202),
the first main abutment surface (21) rests against a radial securing surface (204) of the seat (202), and
a second minor abutment surface (42a) of the second minor side surface (4a) rests against an axial support surface (205).

11. The milling tool according to claim 10, wherein - in a view along the third axis (A3) of the tangential milling cutting insert (100), the radial support surface (203) of the seat (202) and the radial securing surface (204) of the seat (202) enclose an acute angle (β).

12. The milling tool according to claim 10 or 11, wherein - in a view along the second axis (A2) of the tangential milling cutting insert (100), the radial support surface (203) of the seat (202) and the axial support surface (205) of the seat (202) enclose an acute angle (γ).

13. The milling tool according to any one of claims 10 to 12, wherein the seat (202) has an auxiliary securing surface (206) distanced from and extending at least regionally parallel to a first auxiliary stop surface (23) of the tangential milling cutting insert (100).
